Europäisches Patentamt

(19) European Patent Office

Office européen des brevets

(11) Numéro de publication : **0 445 022 A2**

# (12) DEMANDE DE BREVET EUROPEEN

(21) Numéro de dépôt : **91400518.6**

(22) Date de dépôt : **26.02.91**

(51) Int. Cl.⁵ : **G01N 15/06, G01N 27/64**

(30) Priorité : **27.02.90 FR 9002414**

(43) Date de publication de la demande :
**04.09.91 Bulletin 91/36**

(84) Etats contractants désignés :
**DE GB NL**

(71) Demandeur : **COMMISSARIAT A L'ENERGIE ATOMIQUE**
**31-33, rue de la Fédération**
**F-75015 Paris (FR)**

(72) Inventeur : **Pourprix, Michel**
**7 Allée des Maraîchers**
**F-91310 Montlhery (FR)**

(74) Mandataire : **Mongrédien, André et al**
**c/o BREVATOME 25, rue de Ponthieu**
**F-75008 Paris (FR)**

(54) Procédé et dispositif d'étalonnage d'un compteur de particules.

(57)     Procédé d'étalonnage d'un compteur de particules, caractérisé par les étapes suivantes :
— on constitue dans un courant de gaz vecteur un aérosol de particules de même granulométrie ;
— on soumet cet aérosol à un chargeur bipolaire (32), comportant d'une source radioactive ionisante ;
— on fait passer l'aérosol ainsi chargé dans un sélecteur de mobilité (42) qui, d'une part, fixe les particules chargées sur les électrodes en les classant en fonction du nombre p de leur charges électriques élémentaire e, et laisse échapper, d'autre part, les particules électriquement neutres ;
— on recueille ces particules neutres et on les envoie dans le compteur de particules à étalonner (58) qui affiche une valeur $N'_o$ ;
— on calcule les valeurs $N_p$ et $N_{(p+1)}$ du nombre des particules de charges pe et $(p+1)e$ fixées par le sélecteur et on en déduit le nombre $N_o$ de particules neutres réellement envoyées dans le compteur ;
— on compare $N'_o$ et $N_o$.

EP 0 445 022 A2

Jouve, 18, rue Saint-Denis, 75001 PARIS

FIG. 1

# PROCEDE ET DISPOSITIF D'ETALONNAGE D'UN COMPTEUR DE PARTICULES

La présente invention se rapporte aux méthodes et aux dispositifs qui permettent d'étalonner un compteur de particules d'aérosol, c'est-à-dire un appareil apte à déterminer la concentration (nombre de particules par unité de volume) d'un aérosol déterminé et si possible le spectre granulométrique de ces particules.

D'une manière générale, diverses méthodes sont déjà connues et utilisées dans l'industrie pour déterminer la dimension et/ou la concentration des particules en suspension dans l'atmosphère, méthodes qui sont mises en oeuvre dans ces compteurs.

Une méthode d'étalonnage de ces compteurs repose sur l'examen d'une grandeur caractéristique des particules d'un aérosol que l'on appelle sa mobilité électrique. Cette grandeur, qui définit la plus ou moins grande aptitude d'une telle particule à subir une déviation sous l'effet d'un champ électrostatique, peut se traduire par l'égalité suivante :

$$\vec{W} = Z\vec{E}$$

égalité vectorielle dans laquelle W est la vitesse de dérive acquise par la particule sous l'influence du champ électrique $\vec{E}$ auquel elle est soumise. Le coefficient Z de proportionnalité entre les deux grandeurs précédentes est précisément la mobilité électrique en question. Cette mobilité électrique est, d'une part proportionnelle à la charge électrique de la particule et d'autre part inversement proportionnelle à sa granulométrie, ce qui est d'ailleurs conforme à l'intuition.

Il existe également dans l'industrie des appareils dits "analyseurs" ou "sélecteurs" de mobilité différentielle qui permettent à l'aide de moyens électrostatiques de séparer, en fonction de leur mobilité électrique propre, les différentes particules appartenant à un flux d'aérosol déterminé. Actuellement, les méthodes d'étalonnage en concentration ou en granulométrie des compteurs de particules d'aérosol qui reposent sur l'utilisation d'un tel sélecteur de mobilité électrique, sont les plus utilisées. Avant d'exposer en détail l'invention, on procèdera d'abord à quelques rappels.

En ce qui concerne d'abord l'étalonnage en granulométrie ou en dimension des compteurs de particules d'un aérosol, les méthodes utilisées et parfaitement maîtrisées à ce jour, consistent soit à fabriquer l'aérosol à partir de particules calibrées, soit à préparer l'aérosol à partir d'une solution d'un sel dans l'eau. Dans le premier cas, on utilise par exemple des microsphères de polystyrène latex dont le diamètre connu est compris entre 0,1 et 10 micromètres, puis on pulvérise à l'aide d'une machine pneumatique une suspension liquide de ces particules calibrées. Après pulvérisation et séchage, le flux de particules se répartit en plusieurs familles et notamment :

a) des résidus secs provenant de l'évaporation des gouttelettes qui ne portent pas de billes de latex (il s'agit d'impuretés) :

b) des résidus secs provenant de l'évaporation des gouttelettes portant une seule microsphère (ce sont des singlets) ;

c) des résidus provenant de l'évaporation de gouttelettes portant deux microsphères (ce sont des doublets) etc.

On a donc ainsi un spectre de particules de dimensions discontinues composées d'impuretés, de singlets, de doublets, de triplets etc. Pour obtenir un flux étalon de granulométrie déterminée, il est nécessaire de sélectionner une famille particulière parmi les précédentes, ce que l'on réalise précisément sans difficulté à l'aide d'un sélecteur de mobilité électrique.

Dans le deuxième cas, si l'aérosol de départ n'est pas constitué d'une suspension de particules précalibrées, ce peut être par exemple un aérosol obtenu par pulvérisation d'une solution d'un sel dans l'eau, on obtient alors un résidu sec après séchage, composé de particules polydispersées, c'est-à-dire dont les granulométries peuvent varier de façon aléatoire et continue dans un domaine déterminé. Dans ce cas encore il suffira de faire passer cet aérosol dans un sélecteur de mobilité différentielle pour obtenir à la sortie des particules quasiment monodispersées, c'est-à-dire ayant toutes la même granulométrie et directement utilisables pour l'étalonnage d'un compteur.

L'invention concerne plus particulièrement l'étalonnage en concentration, c'est-à-dire en nombre de particules par unité de volume. Le problème est plus délicat et l'un des seuls dispositifs couramment utilisés pour réaliser cet étalonnage est décrit, par Jugal K Agarwal et Michel Pourprix, dans l'article "A continuous flow CNC capable of counting single particles" publié dans les Proceedings of 9th International Conference on Atmospheric Aerosols, Condensation and Ice Nuclei, Galway, Ireland 1977. L'appareil et le procédé décrits dans cet article reposent sur les deux caractéristiques essentielles suivantes :

D'abord, l'aérosol sur lequel on travaille est un aérosol monodispersé, dont toutes les particules portent une seule charge électrique. L'homme de métier sait parfaitement obtenir une telle population de particules par les méthodes décrites ci-dessus (billes de latex calibrées issues d'un sélecteur de mobilité électrique par exemple).

Par ailleurs, la concentration recherchée est mesurée à l'aide du courant électrique induit par le flux des particules chargées lors de leur passage dans un électromètre disposé en parallèle par rapport au compteur à tester. En effet, le courant i mesuré par cet électromètre s'exprime par l'égalité i = QNe,

Q étant le débit de l'aérosol en $cm^3/s$,

N la concentration des particules par $cm^3$ et

e la charge électrique élémentaire qui vaut $1,6.10^{-19}$ Coulomb.

Connaissant i et Q, on en déduit donc facilement, au moins en théorie, la valeur N de la concentration des particules par $cm^3$ dans le débit d'aérosol. Ce procédé connu comporte un premier inconvénient : il nécessite de supposer que la répartition du flux d'aérosols entre compteur à étalonner d'une part, électromètre de mesure d'autre part, soit bien connue.

De plus, le développement de certaines techniques nouvelles notamment électroniques, qui impliquent la réalisation de grands volumes d'air à très haute pureté, c'est-à-dire à faible concentration en particules (salles blanches), nécessitent aujourd'hui de pouvoir estimer dans l'atmosphère des concentrations qui sont typiquement de l'ordre de 10 à 100 particules par pied cube, c'est-à-dire 10 à 100 particules dans 28000 $cm^3$. Or, les meilleures méthodes actuelles d'étalonnage et en particulier celle que l'on vient de décrire, ne permettent pas de mesurer des concentrations inférieures à 200 particules par $cm^3$, c'est-à-dire environ $5,6.10^6$ particules/pied cube. C'est dire qu'il y a là un problème très important non résolu dans la technique actuelle puisque les meilleures méthodes d'étalonnage connues se limitent à des concentrations environ $10^4$ fois plus fortes que celles qu'il serait nécessaire d'atteindre pour pratiquer des étalonnages dans une gamme de mesure compatible avec les normes de référence en ambiance ultra propre.

La présente invention a précisément pour objet un procédé d'étalonnage de compteurs de particules d'aérosol qui permet à l'aide de moyens simples à mettre en oeuvre d'obtenir une mesure quasi-absolue de la concentration des particules d'un aérosol même à des concentrations égales à celles des ambiances ultra propres.

Le procédé d'étalonnage d'un compteur de particules objet de l'invention se caractérise par les étapes suivantes :

— on constitue dans un courant de gaz vecteur un aérosol de particules de même granulométrie (monodispersées) ;

— on soumet cet aérosol à un chargeur bipolaire, composé par exemple d'une source radioactive ionisante apte à développer, dans le gaz vecteur de l'aérosol, des ions des deux signes qui chargent électriquement les particules et les portent à un état de charge stationnaire dans lequel la répartition du nombre des charges fixées sur chaque particule suit une loi gaussienne (Gunn ou Boltzmann) ;

— on fait passer l'aérosol ainsi chargé dans un sélecteur de mobilité qui, d'une part, fixe les particules chargées sur les électrodes en les classant en fonction du nombre p de leurs charges électriques élémentaires e, et laisse échapper, d'autre part, les particules électriquement neutres ;

— on recueille ces particules neutres et on les envoie dans le compteur de particules à étalonner qui affiche une valeur $N'_o$ ;

— on compte les nombres $N_p$ et $N_{(p+1)}$ des particules de charges pe et (p+1)e fixées par le sélecteur et on en déduit le nombre $N_o$ de particules neutres réellement envoyées dans le compteur par la formule

$$N_o = N_p \exp \left\{ \frac{\eta}{2} \left[ p^2 - 2p \left( p + \frac{1}{2} - \frac{1}{\eta} \ln \frac{N_p}{N_{p+1}} \right) \right] \right\}$$

(formule dans laquelle $\eta = \dfrac{2\,e^2}{dKT}$ où :

d est le diamètre des particules ;

K la constante de Boltzmann ;

T la température absolue en Kelvin ;

ln désigne le logarithme népérien ;

— on compare $N'_o$ et $N_o$.

Comme on le voit, le procédé précédent repose essentiellement sur deux phénomènes physiques qui sont les suivants.

D'abord, les lois de charge des aérosols en milieu ionisé bipolaire conduisent à un état électrique stationnaire dans lequel la répartition du nombre de charges fixées sur chaque particule suit une loi gaussienne (loi de Boltzmann ou loi de Gunn) de la forme :

$$\frac{N_p}{Z} = \sqrt{\frac{e^2}{\pi dKT}} \quad \exp \left[ \frac{-(p-\bar{p})^2 e^2}{dKt} \right]$$

où

e = charge électrique élémentaire 4,8.10$^{-10}$ ues cgs)

d = diamètre des paraticules (cm)

K = constante de Boltzmann (1,38.10$^{-16}$ erg/°)

T = température absolue (°K)

p = nombre de charges électriques portées par les particules

$\bar{p}$ = charge moyenne de l'aérosol (si $\bar{p}$ = 0, loi de Boltzmann, si p ≠ 0, loi de Gunn)

$N_p$= nombre de particules portant p charges par unité de volume (cm$^{-3}$)

Z = nombre total de particules (cm$^{-3}$).

Ensuite, la forme très particulière de cette loi gaussienne de répartition des charges permet de relier les nombres No de particules neutres d'un aérosol ainsi chargé et les nombres $N_p$ et $N_{p+1}$ de particules de cet aérosol comportant p charges élémentaires et p+1 charges élémentaires. Selon la formule :

$$N_o = N_p \exp \left\{ \frac{\eta}{2} \left[ p^2 - 2p \left( p + \frac{1}{2} - \frac{1}{\eta} \ln \frac{N_p}{N_{p+1}} \right) \right] \right\}$$

Ainsi donc il est facile, en utilisant un sélecteur de mobilité électrique de particules, de capter séparément les particules chargées en vue de compter les nombres $N_p$ et $N_{p+1}$, d'en déduire selon la formule précédente le nombre de particules neutres $N_o$ contenues dans cet aérosol et de les envoyer sur un compteur à tester, pour comparer finalement ce nombre calculé à l'indication du compteur lui-même. Cette disposition permet, d'une part, de lever l'incertitude sur la répartition des particules entre le compteur à tester et le capteur étalon, incertitude qui est l'un des défauts du procédé de l'art antérieur. Elle permet d'autre part, la mise en oeuvre de méthodes de couplage de dépôt surfacique de grande précision.

Cette méthode a l'avantage d'être une méthode absolue. Elle dépend essentiellemenet de la précision avec laquelle on sait compter $N_p$ et $N_{p+1}$, ±5% étant le domaine d'incertitude typique. De plus, elle permet l'étalonnage des compteurs à des concentrations ultra faibles de particules comme on en rencontre aujourd'hui par exemple dans les salles blanches. Par rapport aux méthodes de l'art antérieur, l'invention permet d'abaisser d'un facteur de l'ordre de 10$^4$ les concentrations en particules nécessaires pour réaliser l'étalonnage des compteurs, qui sont ainsi calibrés dans leurs plages d'utilisation en salle blanche.

Bien entendu, le sélecteur de mobilité utilisé dans le procédé objet de l'invention peut être, au moins en théorie d'une nature quelconque et notamment conforme aux sélecteurs les plus souvent utilisés jusqu'à ce jour qui sont de géométrie plane longitudinale ou de géométrie cylindrique axiale.

Toutefois, la demanderesse a mis en évidence qu'un type nouveau de sélecteur de mobilité était apte à permettre une mise en oeuvre plus simple et plus sûre du procédé objet de l'invention.

Ce sélecteur de mobilité est un capteur électrostatique qui comprend deux disques conducteurs coaxiaux, espacés et parallèles, entre lesquels on établit un champ électrique en les portant à des potentiels différents, l'espace compris entre les deux disques communiquant sur toute sa périphérie avec l'atmosphère à examiner, une aspiration centrale étant prévue dans cet espace pour y faire circuler, à partir de la périphérie des disques, une partie de cette atmosphère sous forme d'un écoulement laminaire centripète et stable.

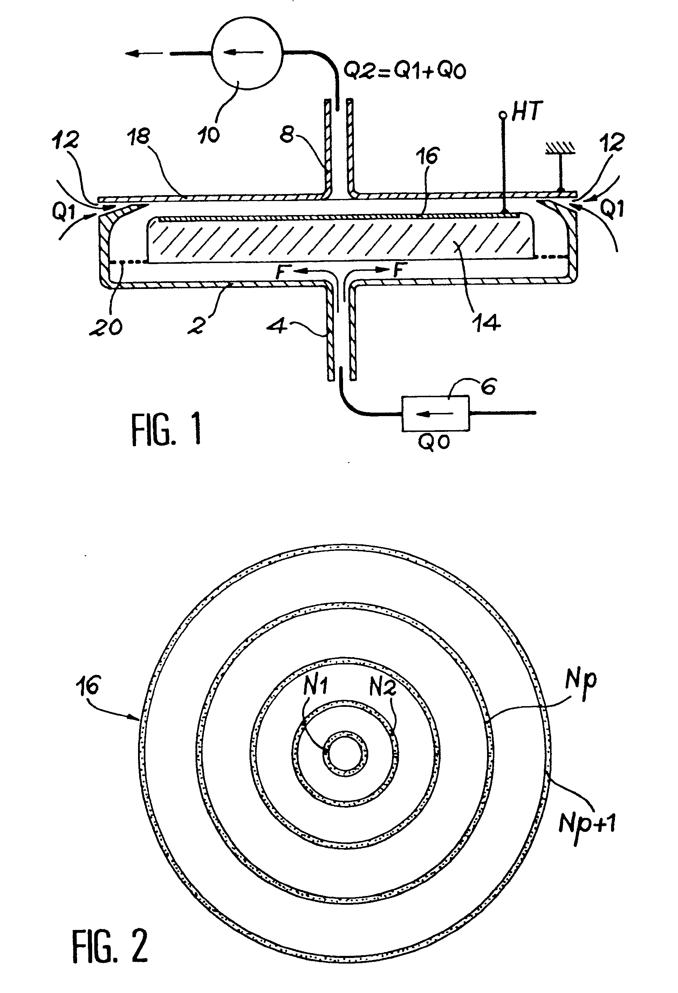

Dans sa forme la plus simple représentée sur la figure 1 ci-jointe, ce capteur électrostatique utilisé comme sélecteur de mobilité est constitué de la façon suivante. Pour l'essentiel, ce capteur comprend, un boîtier cylindrique circulaire de forme aplatie 2, équipé selon son axe central d'une entrée 4 pour le débit d'injection $Q_o$ de gaz d'entraînement sous l'effet d'une pompe 6 ; selon son même axe mais à la partie supérieure, se trouve une canalisation de sortie 8 de l'atmosphère aspirée sous l'effet de la pompe d'aspiration 10. A la partie supérieure du boîtier 2 se trouve une fente annulaire 12 destinée à la pénétration de l'atmosphère à examiner sous l'angle de son contenu en particules d'aérosol. Le débit Q1 de prélèvement du gaz à examiner pour le faire circuler dans le boîtier 2, résulte de la différence entre le débit d'aspiration de gaz Q2 sous l'effet de la pompe 10 et du débit d'injection $Q_o$ à l'entrée sous l'effet de la pompe 6.

A l'intérieur du boîtier 2 se trouve un disque épais massif 14, conducteur ou non de l'électricité, à la surface supérieure duquel repose l'un des deux disques conducteurs coaxiaux 16 constituant, avec la partie supérieure 18 du boîtier 2, les deux disques conducteurs coaxiaux caractéristiques de l'invention. Le disque supérieur 18 est porté à la masse alors que le disque inférieur 16 est porté à une haute tension positive ou négative par rapport à cette même masse. Le gaz d'entraînement véhiculé par la pompe 6 et injecté dans la canalisation 4, pénètre dans la boîte 2 par la partie inférieure et s'y répartit selon une symétrie de révolution symbolisée par les flèches F pour traverser un filtre annulaire 20 qui le purifie complètement en éliminant toutes les particules en suspension qu'il peut contenir et en régularise l'écoulement. Ce gaz une fois filtré contourne la partie supérieure du disque épais 14 et entraîne le débit Q1 d'atmosphère à examiner selon un écoulement laminaire stable et centripète dans l'espace situé entre les deux disques conducteurs coaxiaux 16 et 18. Ce gaz est ensuite aspiré au centre du dispositif par la canalisation 8 sous l'effet de la pompe 10. Après un certain temps de fonctionnement nécessaire à la capture électrostatique sur les disques 16 et 18 des particules d'aérosol contenues dans le débit d'atmosphère prélevée au travers de l'ouverture 12, on peut ouvrir l'appareil et observer le disque 16 qui présente l'aspect représenté sur la fig. 2 où l'on voit les particules d'un signe déterminé, si elles sont toutes de même granulométrie, déposées en zones annulaires concentriques correspondant à leurs différentes mobilités électriques, c'est-à-dire en fin de compte, à leurs différentes charges électriques, 1, 2,...p, p+1.

Le nombre des particules des différentes zones annulaires consécutives est donc en rapport avec les valeurs $N_1$, $N_2$... $N_p$, $N_{p+1}$ dont il a été question précédemment et que l'homme de métier sait compter à l'aide d'un analyseur de dépôt surfacique et d'un traitement informatique en soi connu.

Ce type de sélecteur de mobilité électrique de particules permet à la fois par sa symétrie circulaire et son écoulement gazeux laminaire centripète et stable une collection totale des particules chargées (en réglant évidemment la différence de potentiel entre les disques 16 et 18 et le débit $Q_2$ à cet effet) ainsi qu'un dénombrement facile de celles-ci par zones annulaires à l'aide de moyens informatiques bien connus de l'homme de métier.

C'est ainsi que le comptage des particules portant p et p+1 charges, déposées sur deux zones annulaires concentriques consécutives permet le calcul précis du nombre $N_o$ de particules neutres contenues dans l'aérosol examiné. De façon pratique, le plus souvent, on effectue ce calcul à partir des nombres $N_1$ et $N_2$ des particules portant une et deux charges élémentaires, c'est-à-dire des deux premières zones annulaires.

Si dans la théorie, le calcul de $N_o$ à partir de $N_p$ et de $N_{p+1}$ peut être fait selon la formule précédemment donnée, il est plus souvent fait recours dans la pratique à la formule qui suit, qui découle de la première et qui donne la valeur de $N_o$ en fonction des nombres de particules $C_1$ et $C_2$ portant respectivement une et deux charges élémentaires telles qu'on peut les compter sur la surface de dépôt et telles qu'elles ont été déposées pendant la durée $\Delta t$ qu'a duré ce même dépôt. Cette formule s'écrit de la façon suivante

$$N_o = \frac{C_1}{Q_o \Delta t} \ \exp \left[ \frac{-e^2}{dKT} \left( 2 - \frac{dKT}{e^2} \ \ln \frac{C_1}{C_2} \right) \right]$$

avec :

$N_o$ = concentration en particules neutres étalon (part./cm³)

$Q_o$ = débit d'extraction du capteur électrostatique (cm³/s)

$\Delta t$ = durée pendant laquelle se fait le dépôt (s)

$C_1$, $C_2$ = nombre de particules portant une et deux charges, comptées sur la surface de dépôt, en relation directe avec les concentrations $N_1$ et $N_2$ précédemment définies.

La demanderesse a mis en évidence qu'il était possible, lorsque le procédé d'étalonnage d'un compteur de particules, objet de la présente invention, était mis en oeuvre à l'aide d'un sélecteur de mobilité électrique à symétrie circulaire et à écoulement centripète, de parvenir à un dispositif d'étalonnage particulièrement simple et compact dont la forme intégrée rend l'utilisation particulièrement commode.

Ce dispositif de mise en oeuvre du procédé d'étalonnage d'un compteur de particules, dans lequel les particules de même granulométrie sont elles-mêmes produites par filtration électrostatique sélective, dans un premier sélecteur de mobilité, d'un aérosol primaire ayant plusieurs granulométries discrètes, se caractérise en ce qu'il comporte, dans un même boîtier cylindrique et disposés les uns aux-dessous des autres, un espace cylindrique annulaire de chargement bipolaire, comportant par exemple une source ionisante et recevant un aérosol de particules monodispersées, et un sélecteur de mobilité communiquant avec l'espace de charge et dispersant, sur ses électrodes, en fonction de leurs charges, la totalité des particules chargées qu'il reçoit, le débit d'aspiration de ce sélecteur de mobilité ne contenant plus que les particules neutres à compter.

De préférence, le dispositif comporte également un présélecteur de mobilité électrique à symétrie circulaire. Grâce à ce présélecteur, il peut recevoir à l'entrée l'aérosol primaire ayant plusieurs granulométries différentes. De préférence également, le dispositif comporte en outre une chambre d'injection de l'aérosol primaire en communication avec l'espace de charge bipolaire, soit directement, soit par l'intermédiaire du présélecteur de mobilité électrique.

Dans son mode de réalisation préféré, ce dispositif d'étalonnage selon la présente invention rassemble donc dans un même boîtier cylindrique en quatre étages superposés les fonctions d'injection, de premier et de deuxième sélecteurs de mobilité, et de chargement bipolaire. Les deux étages sélecteurs de mobilité sont séparés par une chambre d'ionisation comportant une source radioactive, par exemple alpha, qui provoque la charge bipolaire des particules de l'aérosol, caractéristique d'une des étapes essentielles du procédé d'étalonnage selon l'invention.

De toute façon, l'invention sera mieux comprise en se référant à la description qui suit de plusieurs exemples de mise en oeuvre du procédé et du dispositif, exemples qui seront donnés à titre illustratif et non limitatif en se référant aux figures 1 à 8 ci-jointes sur lesquelles :

– la figure 1 représente le schéma de principe d'un sélecteur de mobilité électrique de particules chargées, à symétrie circulaire et à écoulement laminaire centripète ;

– la figure 2 représente, vus en plan, les dépôts, sous forme de zones annulaires successives, des particules dispersées selon leur charge sur la plaque de collection de l'appareil de la figure 1 ;

– les figures 3a à 3d représentent la répartition des charges électriques des particules d'un aérosol soumis à un chargeur bipolaire dans le cas d'une répartition symétrique dite de Boltzmann ;

– la figure 4 montre les mêmes charges d'un flux de particules dans le cas d'un équilibre différent de celui de Boltzmann et connu sous le nom d'équilibre de Gunn ;

– la figure 5 montre le spectre granulométrique des particules obtenues lors de la préparation d'un aérosol par pulvérisation d'une solution de billes de polystyrène latex précalibrées ;

– la figure 6 montre le schéma de principe d'une installation de mise en oeuvre du procédé d'étalonnage objet de l'invention dans le cas général ;

– la figure 7 montre le schéma de réalisation d'un dispositif d'étalonnage d'un compteur de particules selon l'invention ;

– la figure 8 montre plus en détail le mode de réalisation industriel du schéma de la figure 7.

Les figures 1 et 2 déjà décrites précédemment sont illustratives d'une réalisation particulière de sélecteur de mobilité électrique s'appliquant particulièrement bien au cas particulier du procédé objet de la présente invention.

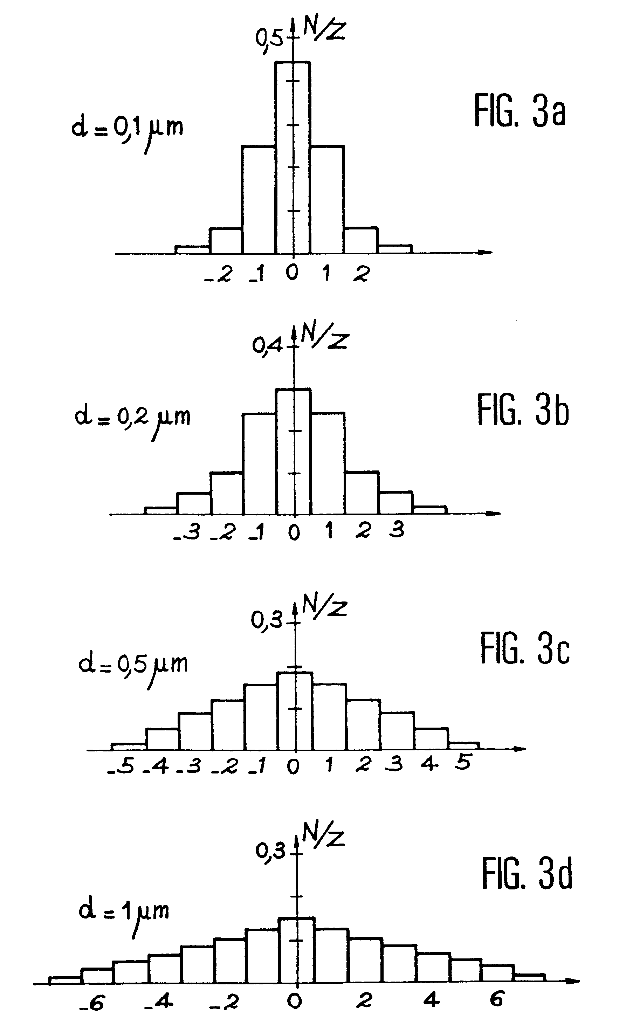

Les figures 3 (3a à 3d) permettent de comprendre l'effet de la phase de chargement bipolaire des particules d'un aérosol à l'aide d'ions des deux signes engendrés dans le gaz vecteur de ce même aérosol. Sur ces figures on a représenté en abscisses le nombre de charges par particules et en ordonnées en coordonnées réduites, le nombre de particules possédant une charge électrique déterminée par rapport au nombre de particules total. La figure 3a est relative à des particules d'un diamètre de 0,1 micromètre, la figure 3b a des particules de 0,2 micromètre, la figure 3c a des particules de 0,5 micromètre et la figure 3d a des particules de 1 micromètre. L'hypothèse illustrée sur ces différentes figures 3 est celle d'une répartition de Boltzmann dans laquelle l'aérosol est globalement neutre et où les particules chargées d'un signe sont en nombre égal à celles chargées du signe opposé. Les différentes figures permettent de voir, ce qui est d'ailleurs connu de l'homme de métier, que plus le diamètre des particules est élevé, moins il y a de particules neutres et plus il y a de particules portant des charges multiples de la charge élémentaire e.

Quoi qu'il en soit, l'intérêt de cette distribution de Boltzmann réside dans le fait, mis en évidence par la demanderesse, que la connaissance du nombre de particules portant p charges et du nombre de particules portant p+1 charges, autrement dit la connaissance de deux points de la "courbe" précédente permet de déterminer le nombre de particules $N_o$ qui ne sont pas chargées. Dans le cas particulier de la configuration de Boltzmann ici décrite, il suffit même en théorie de connaître par exemple le nombre $N_1$ de particules possédant une charge élémentaire pour déterminer le nombre de particules neutres $N_o$.

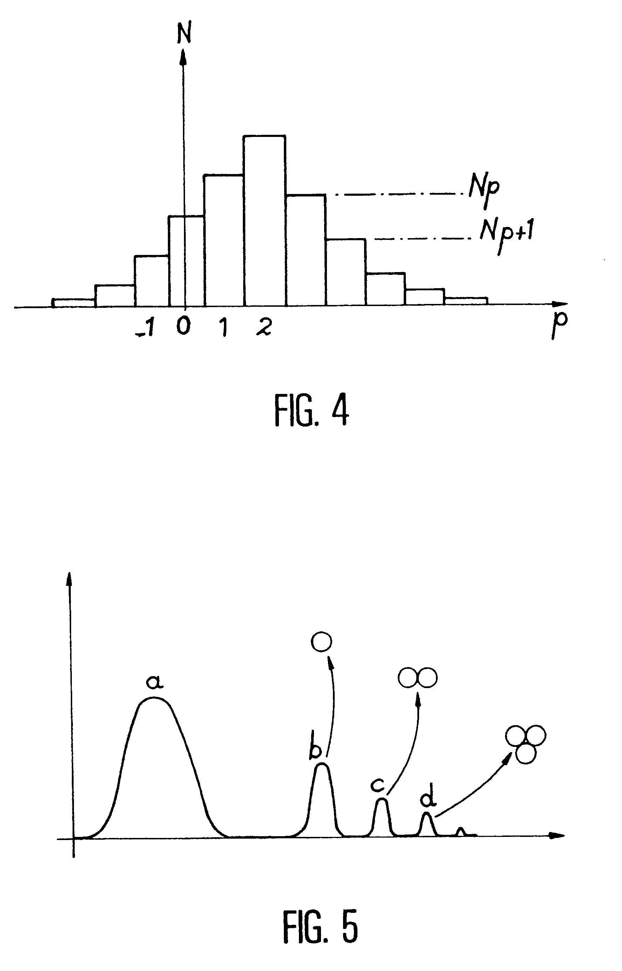

Dans le cas général d'un chargement bipolaire tel qu'il a été décrit précédemment, l'équilibre obtenu pour les différentes charges sur les particules est un équilibre qui répond à la loi de Gunn telle qu'on l'a représenté sur la figure 4 et qui diffère du précédent par le fait que la "courbe" de répartition des charges n'est plus symétrique autour de la bande correspondant aux particules neutres $N_o$. Dans ce cas toutefois, comme dans le précédent, la connaissance de deux valeurs consécutives quelconques du nombre de particules $N_p$ et $N_{p+1}$ permet

de déterminer le nombre de particules neutres $N_0$ ce qui est finalement la condition essentielle permettant la mise en oeuvre du procédé objet de l'invention. C'est donc la phase de chargement bipolaire du gaz vecteur des particules d'un aérosol déterminé qui permet, en appliquant les caractéristiques précédentes des spectres de charges, de déterminer le nombre exact $N_0$ de particules neutres contenues dans un flux donné d'aérosol et par là-même de mettre en oeuvre le procédé objet de l'invention.

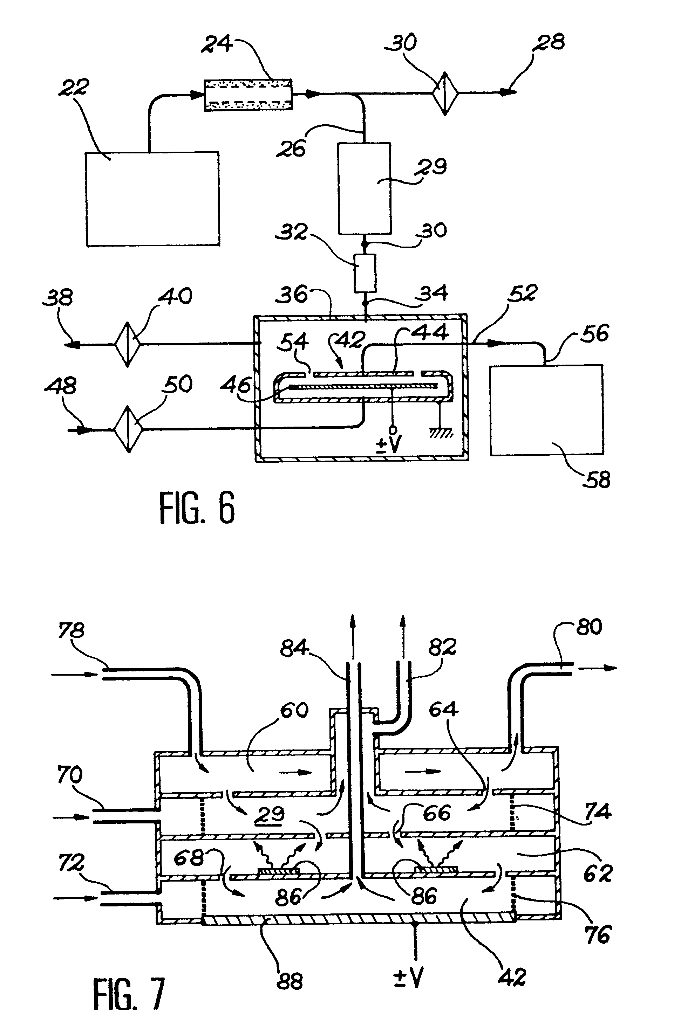

En se référant maintenant à la figure 5, on expliquera les phénomènes physiques qui se produisent lorsque, pour étalonner un compteur de particules en granulométrie, on fabrique un aérosol de granulométrie étalon à partir de microsphères de polystyrène latex précalibrées. A cet effet, le procédé le plus couramment utilisé consiste à mettre en suspension dans un gaz, généralement de l'air, des aérosols monodispersés, c'est-à-dire dont toutes les particules ont la même dimension en granulométrie.

Pour ce faire, on utilise les microsphères de polystyrène latex commercialisées couramment par divers fournisseurs et dont le diamètre des particules est compris généralement entre 0,1 et 10 micromètres avec une déviation standard extrêmement faible de l'ordre de 1%. On réalise d'abord une suspension liquide de telles particules calibrées, généralement dans de l'eau ultra pure, puis on pulvérise ce liquide à l'aide de moyens pneumatiques mettant les gouttelettes en suspension dans le gaz vecteur. La méthode de préparation précédente conduit bien entendu à réaliser un aérosol dont les particules ont des dimensions variables puisqu'elles peuvent comporter 0,1, 2 ou p microsphères de latex. Après séchage des gouttelettes précédentes, le flux gazeux que l'on obtient comporte en suspension plusieurs familles de particules qui sont précisément celles dont la concentration est représentée sur la figure 5 en fonction de leur diamètre.

Les différents pics de concentration visibles sur cette figure 5 correspondent aux cas suivants :

Le pic a correspond à des résidus secs qui proviennent de l'évaporation des gouttelettes, desquelles ne subsistent que certaines impuretés à l'exclusion de microsphères de latex ;

Le pic b qui est déjà moins important en intensité correspond à des résidus secs qui proviennent de l'évaporation des gouttelettes portant une seule microsphère (gouttelettes que l'on peut qualifier de singlets).

Le pic c correspond à des résidus secs provenant de l'évaporation de- gouttelettes portant deux microsphères (que l'on peut ainsi qualifier de doublets) ;

Le pic d correspond à des triplets etc.

Les différentes familles de particules précédentes sont également porteuses, par suite des frottements qui sont intervenus lors de la pulvérisation, d'un nombre de charges électriques aléatoire, mais bien entendu égal à un multiple de la charge électrique élémentaire e.

Conformément à une technique connue, il suffit de faire passer un tel flux de particules dans un sélecteur de mobilité pour obtenir en sortie de celui-ci et en fonction bien entendu du réglage choisi, un flux de particules qui sont toutes de même granulométrie (monodispersées) et possédant une seule charge électrique. En d'autres termes, ce passage dans un sélecteur de mobilité électrique permet de sélectionner le groupe b des singlets de la figure 5 qui sont alors tous munis de la charge électrique élémentaire e.

La figure 6 représente le schéma de principe d'une installation permettant la mise en oeuvre du procédé d'étalonnage d'un compteur de particules, objet de l'invention. Sur cette figure 6 on a représenté, un générateur d'aérosol de microsphère de latex 22 fonctionnant comme il vient d'être expliqué en se référant à la figure 5. A la sortie de ce générateur d'aérosol 22, le flux de particules traverse un sécheur 24 et la partie 26 du flux d'aérosol qui n'a pas été rejetée en 28 à l'extérieur au travers d'un filtre 30, pénètre dans un premier analyseur différentiel de mobilité electrique ou sélecteur de mobilité électrique 29. Ce sélecteur de mobilité (29) est réglé de façon à ne laisser passer à sa sortie 30 que des particules monodispersées, par exemple des singlets, ayant toutes la même charge électrique unitaire e. Ce flux d'aérosol est ensuite véhiculé, conformément à l'invention, vers un chargeur bipolaire 32 qui est un espace dans lequel une source radioactive ionisante, par exemple une source alpha, ionise le gaz vecteur de l'aérosol en y provoquant l'apparition d'ions gazeux des deux signes. Ce gaz vecteur ionisé charge à son tour les particules de l'aérosol qui se trouvent alors dans l'équilibre électrique stationnaire des figures 3 ou 4 précédentes. On injecte alors le flux d'aérosol ainsi chargé dans un second sélecteur différentiel de mobilité de la façon suivante.

A la sortie 34 du chargeur bipolaire 32, le flux gazeux est injecté dans une enceinte fermée 36 comportant une canalisation 38 de sortie de l'excès éventuel de gaz au travers du filtre 40. Dans cette enceinte 36 qui est donc rapidement entièrement remplie par le gaz vecteur dans l'équilibre électrique stationnaire précédent, se trouve situé le deuxième sélecteur de mobilité 42 pouvant être notamment, comme schématisé sur la figure 6, un sélecteur de mobilité électrique à symétrie circulaire et à écoulement gazeux centripète. Ce sélecteur de mobilité 42 comporte deux électrodes reliées respectivement, pour l'électrode extérieure 44, à la masse et, pour l'électrode intérieure 46, à un potentiel élevé égal à $\pm V$ typiquement de plusieurs milliers de volts pour des particules d'un diamètre de l'ordre du micromètre. Le sélecteur de mobilité 42 est parcouru par un gaz d'entraînement qui y pénètre en provenance de l'entrée 48 au travers du filtre 50 et en ressort en 52. Conformément à l'invention, le sélecteur 42 comporte une fente d'aspiration 54 par laquelle le flux d'écoulement du gaz d'entraînement précédent aspire le gaz vecteur de l'aérosol en le faisant passer au voisinage de l'électrode 46. Cette électrode étant chargée à haute tension positive ou négative fixe, comme représenté sur la figure 2, les différentes particules chargées du gaz vecteur de l'aérosol se répartissent en zones annulaires concentriques dont chacune correspond à des particules ayant un nombre entier de charges électriques élémentaires.

Par principe, le sélecteur de mobilité 42 est réglé pour fixer toutes les particules électriques des deux signes sur ces deux électrodes 44 et 46 et ne laisser sortir en 52 que les particules neutres non chargées qui sont en concentration $N_0$. Conformément à l'invention on envoie ce flux de particules neutres à l'entrée 56 d'un compteur 58 à étalonner et il suffit alors de comparer le nombre $N_0$ calculé d'après la formule précédemment donnée qui relie $N_p$, $N_{(p+1)}$ et $N_0$ à l'indication du compteur 58 pour être en mesure de réaliser un étalonnage absolu de ce même compteur de particules.

Bien entendu, pour le calcul précis du nombre $N_0$ de particules neutres véhiculées jusqu'au compteur de particules 58 à tester, on emploie selon les cas, indifféremment l'une des deux formules données précédemment qui sont d'ailleurs équivalentes et découlent directement l'une de l'autre.

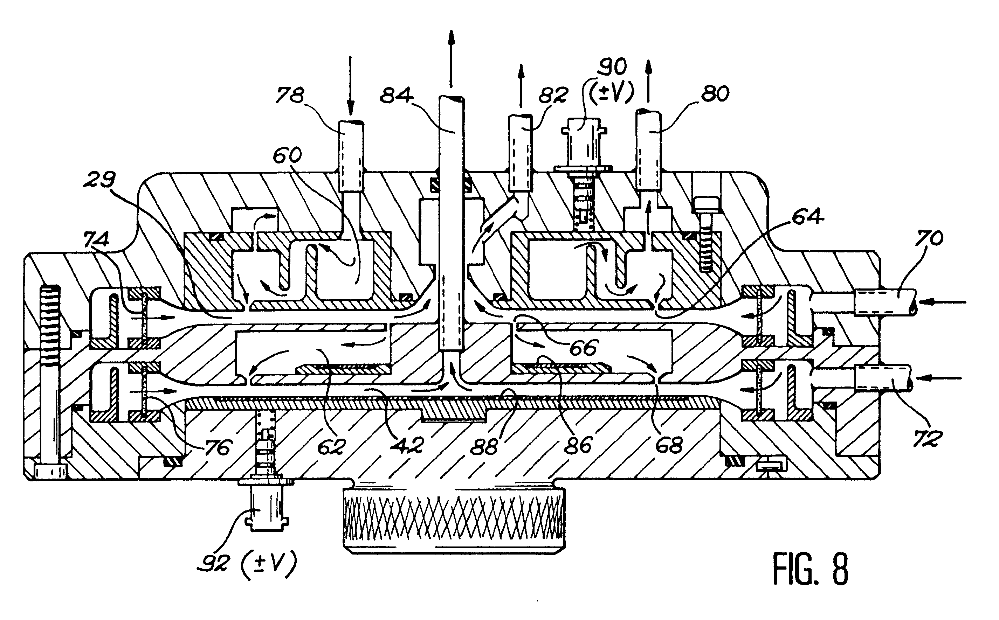

La figure 7 montre un mode de réalisation spécialement intéressant du dispositif schématique de la figure 6. En effet, la demanderesse a mis en évidence que si l'on réalisait les deux sélecteurs de mobilité électrique 29 et 42 de la figure 6 sous forme de sélecteur circulaires à écoulement radial, il était possible de concentrer l'essentiel de l'appareil dans un boîtier cylindrique unique. Un tel boîtier représenté sur la figure 7 comporte, juxtaposés les uns au-dessus des autres, le premier sélecteur de mobilité 29, le deuxième sélecteur de mobilité 42, ainsi qu'une chambre d'injection 60 et une chambre de chargement bipolaire 62. Ces différents éléments communiquent deux à deux les uns avec les autres à savoir la chambre d'injection 60 avec le premier sélecteur de mobilité 29 par la fente annulaire 64, le premier sélecteur de mobilité 29 et la chambre de chargement bipolaire 62 par la fente annulaire 66 et la chambre de chargement 62 et le deuxième sélecteur de mobilité électrique 42 par la fente annulaire 68.

Les deux sélecteurs de mobilité 29 et 42 ont leurs entrées de gaz d'entraînement situées respectivement en 70 et 72 au travers des filtres d'entraînement 74 et 76. Les aérosols primaires en provenance du générateur 22 de la figure 6 sont introduits en 78 dans l'appareil et pénètrent dans la chambre d'injection 60. La partie non utilisée de ces aérosols primaires est rejetée à l'extérieur par la conduite 80. Le premier sélecteur de mobilité 29 est relié à une tubulure d'aspiration 82 qui évacue vers l'extérieur le débit gazeux entré en 70 dans ce même sélecteur 29 alors que le deuxième sélecteur de mobilité 42 a sa tubulure d'aspiration située selon l'axe du dispositif en 84, tubulure par laquelle ne sortent, conformément au procédé objet de l'invention, que les particules neutres des aérosols extraits de la chambre 62.

Le premier sélecteur de mobilité 29 a sa fente annulaire de sortie 66 située à une distance radiale de l'axe du dispositif choisie en fonction de la granulométrie et des caractéristiques électriques de la partie de l'aérosol que l'on souhaite voir aspirer par la fente 66 dans l'espace de chargement bipolaire 62. Cet espace de chargement bipolaire (62) comporte comme représenté schématiquement sur la figure 7, une source ionisante radioactive 86 destinée à charger d'ions des deux signes selon la loi de Boltzmann ou de Gunn le gaz vecteur de la partie d'aérosol qui a pénétré par la fente 66 dans l'espace de chargement 62.

La fente 68 d'alimentation du deuxième sélecteur de mobilité électrique 42 est située à la périphérie de ce dernier de façon à permettre un écoulement de la phase gazeuse chargée d'aérosol, le long de l'électrode de collection 88 des particules chargées de l'aérosol. Conformément à l'invention, la tension électrique $\pm V$ à laquelle est portée cette électrode de collection 88 est choisie, ainsi que le débit d'aspiration dans la canalisation 84 à la sortie du sélecteur 42 de façon à permettre une collection sur le disque électrode 88 de toutes les charges électriques qui ont pénétré dans le sélecteur 42 et à ne laisser aspirer par la sortie 84 que les particules neutres, lesquelles sont alors envoyées sur le compteur à tester 58 non représenté d'ailleurs sur la figure 7.

En se référant enfin à la figure 8, on va décrire une réalisation de caractère industriel correspondant à la structure intégrée de la figure 7.

Sur cette figure 8, on voit essentiellement un bloc cylindrique compact dans lequel sont intégrés côte à côte la chambre d'injection 60, le premier sélecteur de mobilité 29, la chambre de chargement bipolaire 62 et le deuxième sélecteur de mobilité électrique 42. On retrouve également sur la structure de la figure 8, la tubulure 78 d'entrée des aérosols primaires, les entrées 70 et 72 des débits d'entraînement gazeux des sélecteurs de mobilité 29 et 42, ainsi que la sortie d'aspiration 82 du premier sélecteur de mobilité 29 et la sortie réservée aux particules neutres calibrées 84. La source radioactive 86 est située à la base de l'enceinte de chargement bipolaire 62 et deux alimentations à haute tension 90 et 92 sont prévues respectivement pour le premier sélecteur de mobilité 29 et le deuxième sélecteur de mobilité 42. On a également représenté les fentes annulaires 64, 66 et 68 permettant à la partie utile du flux gazeux de passer d'un étage au suivant. La structure de la figure 8 est remarquable par sa compacité et sa facilité d'utilisation, comparativement au montage de la figure 6 (repères 26 à 32) associant les fonctions élémentaires nécessaires pour aboutir au même résultat.

## Revendications

1. Procédé d'étalonnage d'un compteur de particules, caractérisé par les étapes suivantes :
   – on constitue dans un courant de gaz vecteur un aérosol de particules de même granulométrie (monodispersées) ;
   – on soumet cet aérosol à un chargeur bipolaire (32), apte à développer, dans le gaz vecteur de l'aérosol, des ions des deux signes qui chargent électriquement certaines des particules et les portent à un état de charge stationnaire dans lequel la répartition du nombre des charges fixées sur chaque particule suit une loi gaussienne (Gunn ou Boltzmann) ;
   – on fait passer l'aérosol ainsi chargé dans un sélecteur de mobilité (42) qui, d'une part, fixe les particules chargées sur les électrodes en les classant en fonction du nombre p de leur charges électriques élémentaire e, et laisse échapper, d'autre part, les particules électriquement neutres ;
   – on recueille ces particules neutres et on les envoie dans le compteur de particules à étalonner (58) qui affiche une valeur $N'_o$ ;
   – on calcule les valeurs $N_p$ et $N_{(p+1)}$ du nombre des particules de charges pe et (p+1)e fixées par le sélecteur et on en déduit, par la formule

$$N_o = N_p \exp\left\{\frac{\eta}{2}\left[p^2 - 2p\left(p + \frac{1}{2} - \frac{1}{\eta}\ln\frac{N_p}{N_{p+1}}\right)\right]\right\}$$

le nombre No de particules neutres réellement envoyées dans le compteur ;
   – on compare $N'_o$ et $N_o$.

2. Dispositif de mise en oeuvre du procédé d'étalonnage d'un compteur de particules dans lequel des particules de même granulométrie sont produites, caractérisé en ce qu'il comporte, dans un même boîtier cylindrique et disposés les uns aux-dessus des autres, un espace cylindrique annulaire de charge bipolaire (62), recevant l'aérosol de particules monodispersées, et un sélecteur de mobilité (42) communiquant avec l'espace de charge (62) et dispersant, sur ses électrodes (88), la totalité des particules chargées qu'il reçoit, en fonction de leurs charges, le débit d'aspiration (84) de ce sélecteur de mobilité (42) ne contenant plus que les particules neutres à compter.

3. Dispositif selon la revendication 2, caractérisé en ce qu'il comporte également un présélecteur de mobilité électrique à symétrie circulaire (42).

4. Dispositif selon l'une au moins des revendications 2 et 3, caractérisé en ce qu'il comporte en outre une chambre d'injection (60) de l'aérosol primaire en communication avec l'espace de charge bipolaire.

FIG. 1

FIG. 2

FIG. 3a

d = 0,1 µm

FIG. 3b

d = 0,2 µm

FIG. 3c

d = 0,5 µm

FIG. 3d

d = 1 µm

FIG. 4

FIG. 5

FIG. 6

FIG. 7

FIG. 8

EP 0 445 022 A2